# EUROPEAN PATENT APPLICATION

(11) **EP 4 692 199 A1**
(43) Date of publication of application: **11.02.2026**
(21) Application number: 24779757.4
(22) Date of filing: 19.03.2024
(51) Int. Cl.: C08L 9/00, B60C 1/00, C08K 3/04, C08L 61/14

(54) **TIRE RUBBER COMPOSITION, AND TIRE**

(30) Priority: 27.03.2023 JP 2023050321
(71) Applicant: The Yokohama Rubber Co., Ltd., Hiratsuka-shi, Kanagawa 254-8601 (JP)
(72) Inventor: HIJIKATA, Kensuke, Hiratsuka-shi, Kanagawa 254-8601 (JP)
(74) Representative: Grünecker Patent- und Rechtsanwälte PartG mbB
(86) International application number: PCT/JP2024/010791
(87) International publication number: WO 2024/203632

(57) **Abstract**

The tire rubber composition of the present invention is produced by blending from 1 to 100 parts by mass of a rosin-modified phenolic resin having an acid value of less than 30 mg KOH/g with 100 parts by mass of a diene rubber.

## Description

### Technical Field

The present invention relates to a tire rubber composition and a tire containing the tire rubber composition, and particularly relates to a tire rubber composition that enhances dry grip performance and exhibits excellent steering stability and wear resistance, and a tire using the tire rubber composition.

### Background Art

In general, various performances are required for a tire. Among these performances, a tire is required to maintain high levels of grip performance, steering stability, and wear resistance.

This requirement also applies to racing tires for driving on a racing circuit. In the related art, a technique of blending a large amount of filler having a high specific surface area and/or a resin having a high softening point (high-softening-point resin) has been known; however, when a large amount of filler having a high specific surface area is blended, a problem of deterioration of wear resistance occurs due to decrease in strength at break. When a large amount of a high-softening-point resin is blended, a problem of deterioration in steering stability occurs due to a decrease in hardness.

Note that Patent Document 1 listed below describes a tire rubber composition containing from 50 to 200 parts by mass of carbon black having a nitrogen adsorption specific surface area (N₂SA) of 100 to 500 m²/g; and from 5 to 50 parts by mass of a terpene phenolic resin having an acid value of 30 mg KOH/g or more and a hydroxyl value of 5 mg KOH/g or more, per 100 parts by mass of a diene rubber containing a styrene-butadiene copolymer rubber. However, a rosin-modified phenolic resin having an acid value of less than 30 mg KOH/g described below is not described or suggested.

### Citation List

### Patent Literature

Patent Document 1: JP 6791277 B

### Summary of Invention

### Technical Problem

Thus, an object of the present invention is to provide a tire rubber composition that enhances dry grip performance and exhibits excellent steering stability and wear resistance, and a tire using the tire rubber composition.

### Solution to Problem

As a result of diligent research, the inventors of the present invention found that the object described above can be achieved by blending a certain amount of a rosin-modified phenolic resin having an acid value in a specific range into a diene rubber, and thus completed the present invention.

That is, the present invention provides a tire rubber composition containing from 1 to 100 parts by mass of a rosin-modified phenolic resin having an acid value of less than 30 mg KOH/g with respect to 100 parts by mass of a diene rubber.

### Advantageous Effects of Invention

Because the tire rubber composition of an embodiment of the present invention is produced by blending from 1 to 100 parts by mass of a rosin-modified phenolic resin having an acid value of less than 30 mg KOH/g with 100 parts by mass of a diene rubber, the tire rubber composition that enhances dry grip performance and that exhibits excellent steering stability and wear resistance, and a tire using the tire rubber composition can be provided.

It is presumed that the rosin-modified phenolic resin used in an embodiment of the present invention has excellent miscibility with the diene rubber, adequately exhibits functions of an alkaline component (e.g., a vulcanization accelerator) in the rubber composition due to the low acid value, improves dry grip performance, steering stability, and wear resistance.

### Description of Embodiments

The present invention will be described in further detail below.

### Diene Rubber

Any diene rubber that can be compounded in ordinary rubber compositions may be used as the diene rubber used in an embodiment of the present invention. Examples thereof include natural rubber (NR), isoprene rubber (IR), butadiene rubber (BR), styrene-butadiene copolymer rubber (SBR), and acrylonitrile-butadiene copolymer rubber (NBR). These may be used alone, or two or more may be used in combination. Furthermore, the molecular weight and the microstructure thereof are not particularly limited. The diene rubber may be terminal-modified with an amine, amide, silyl, alkoxysilyl, carboxyl, or hydroxyl group or may be epoxidized.

Among these diene rubbers, from the perspective of effectiveness of the present invention, the diene rubber is preferably an SBR. For example, in a case of a racing application, the blended amount of the SBR can be preferably 80 parts by mass or more, and more preferably 100 parts by mass or more.

Furthermore, by setting the styrene amount of the SBR to less than 35 mass%, the effectiveness of the present invention, especially dry grip performance, can be further enhanced. The styrene amount is more preferably from 30 to 10 mass%.

### Rosin-Modified Phenolic Resin

The rosin-modified phenolic resin to be used in an embodiment of the present invention can be a reaction product of a rosin resin, phenols, formaldehyde, and a polyol.

Examples of the rosin resin include unmodified rosins, such as gum rosin, tall oil rosin, and wood rosin; polymerized rosins derived from unmodified rosins; disproportionation products or hydrides of unmodified rosins or polymerized rosins; and unsaturated carboxylic acid-modified rosins obtained by reacting unmodified rosins or polymerized rosins with unsaturated carboxylic acid.

Examples of the phenols include phenol; and alkylphenols, such as methylphenol (cresol), butylphenol, pentyl cresol, octylphenol, nonylphenol, decylphenol, dodecylphenol, tetradecylphenol, and hexyldecylphenol.

Examples of the formaldehyde include formalin and para-formaldehyde.

Examples of the polyol include diols, such as ethylene glycol, 1,3-propyleneglycol, 1,4-butanediol, 1,6-hexanediol, 3-methyl-1,5-pentanediol; triols, such as glycerin, trimethylolpropane, and trimethylolethane; and tetraols, such as pentaerythritol, diglycerin, ditrimethylolpropane, and ditrimethylolethane.

The used amounts of the rosin resin, the formaldehyde, the phenols, and the polyol are not particularly limited and, for example, can be properly selected, taking the desired molecular weight, softening point, and the like into consideration. Furthermore, examples of the reaction method include a method of charging the rosin resin, the phenols/formaldehyde (condensation product), and the polyol all together and allowing the mixture to react. The reaction temperature is typically approximately from 100 to 300°C, and the reaction time is typically approximately from 1 to 24 hours.

The rosin-modified phenolic resin to be used in an embodiment of the present invention needs to have an acid value adjusted to less than 30 mg KOH/g.

The method of adjusting the acid value to less than 30 mg KOH/g is not particularly limited. Examples of a preferred acid value adjustment method include a method of reducing the acid value to less than 30 mg KOH/g by esterifying a rosin-modified phenolic resin prepared as described above or a commercially available rosin-modified phenolic resin (typically having an acid value of 30 mg KOH/g or more). The esterification described above may be performed by an ordinary method and can be performed by using a polyhydric alcohol as an alcohol at a reaction temperature of 150 to 300°C. Because a resin having a low softening point is formed by using a dihydric alcohol such as ethylene glycol, a tri- or higher hydric alcohol is preferably used. The acid value can be adjusted by a charged amount of the alcohol. The rosin-modified phenolic resin prepared by the preferred acid value adjustment method described above can enhance miscibility with a diene rubber and can further enhance the effectiveness of the rosin-modified phenolic resin by allowing an ester bond to be contained in the inside of the rosin-modified phenolic resin.

The acid value of the rosin-modified phenolic resin to be used in an embodiment of the present invention is preferably from 5 to 25 mg KOH/g, and more preferably from 10 to 20 mg KOH/g.

The rosin-modified phenolic resin to be used in an embodiment of the present invention has a weight average molecular weight of preferably from 2000 to 5000, and more preferably from 2500 to 4500, from the perspective of further enhancing the effectiveness of the present invention. Furthermore, the softening point is preferably from 100 to 160°C, and more preferably from 110 to 150°C. The "weight average molecular weight" in the present invention refers to a weight average molecular weight determined by gel permeation chromatography (GPC) based on calibration with polystyrene. Furthermore, the above-mentioned softening point is measured in accordance with JIS K 6220-1.

### Blending Proportion

The rubber composition of an embodiment of the present invention is produced by blending from 1 to 100 parts by mass of a rosin-modified phenolic resin having an acid value of less than 30 mg KOH/g with 100 parts by mass of a diene rubber.

When the blended amount of the rosin-modified phenolic resin described above is less than 1 part by mass, the effectiveness of the present invention cannot be exhibited because the blended amount is too small. On the other hand, when the blended amount is more than 100 parts by mass, hardness and strength at break decrease, and steering stability and wear resistance cannot be enhanced.

The blended amount of the rosin-modified phenolic resin described above is preferably from 5 to 85 parts by mass, and more preferably from 10 to 70 parts by mass, with respect to 100 parts by mass of the diene rubber.

From the viewpoint of further enhancing the effectiveness of the present invention, the tire rubber composition of an embodiment of the present invention preferably contains carbon black having a nitrogen adsorption specific surface area (N₂SA) of 100 to 500 m²/g.

The nitrogen adsorption specific surface area (N₂SA) is more preferably from 125 to 450 m²/g.

Furthermore, the blended amount of the carbon black is preferably from 50 to 200 parts by mass, and more preferably from 80 to 170 parts by mass, with respect to 100 parts by mass of the diene rubber (A). Note that the nitrogen adsorption specific surface area (N₂SA) of the carbon black is a value determined in accordance with JIS K 6217-2.

### Liquid Aromatic Vinyl-Conjugated Diene Rubber

In the tire rubber composition of an embodiment of the present invention, preferably a liquid aromatic vinyl-conjugated diene rubber having a glass transition temperature (Tg) of -40°C or higher is blended. By blending such a liquid aromatic vinyl-conjugated diene rubber, the glass transition temperature (Tg) of the rubber composition increases, and dry grip performance can be enhanced. Furthermore, the liquid aromatic vinyl-conjugated diene rubber is compatible with the diene rubber, enhances dispersibility of the rosin-modified phenolic resin used in an embodiment of the present invention, and can enhance the effectiveness of the present invention.

The liquid aromatic vinyl-conjugated diene rubber is preferably a liquid styrene-butadiene copolymer (liquid SBR). As the liquid SBR, a liquid SBR having a weight average molecular weight of 2000 to 40000, and preferably 3000 to 20000, can be used. Furthermore, the glass transition temperature of the liquid SBR is -40°C or higher as described above, and more preferably from -20°C to -5°C. As the liquid SBR, a commercially available liquid SBR can be used, and examples thereof include RICON 100, available from Cray Valley, and L-SBR 820, available from Kuraray Co., Ltd. Note that, for the Tg in an embodiment of the present invention, a thermogram is measured by differential scanning calorimetry (DSC) at a rate of temperature increase of 20°C/min, and the temperature at the midpoint of the transition region is defined as the glass transition temperature.

Note that the liquid aromatic vinyl-conjugated diene rubber to be used in an embodiment of the present invention is liquid at 23°C. Therefore, it is distinguished from the diene rubber that is solid at this temperature.

Furthermore, the blended amount of the liquid aromatic vinyl-conjugated diene rubber is preferably from 5 to 50 parts by mass, and more preferably from 10 to 45 parts by mass, with respect to 100 parts by mass of the diene rubber.

### Additional Components

The rubber composition in an embodiment of the present invention may contain, in addition to the components described above, vulcanizing or crosslinking agents; vulcanizing or crosslinking accelerators; zinc oxide; various fillers, such as clay, talc, and calcium carbonate; anti-aging agents; plasticizers; and other various additives commonly blended in rubber compositions. The additives are kneaded by a common method to obtain a composition that can then be used for vulcanization or crosslinking. The blended amount of such an additive may be any standard blended amount in the related art, so long as the object of the present invention is not hindered.

Note that an additional resin other than the rosin-modified phenolic resin can be also blended as necessary. Examples thereof include phenolic resins (e.g., a phenolic resin, a phenol-acetylene resin, and a phenol-formaldehyde resin), coumarone resins (e.g., a coumarone resin, a coumarone-indene resin, and a coumarone-indene-styrene resin), terpene resins (e.g., a terpene resin, a modified terpene resin (such as an aromatic modified terpene resin), and a terpene-phenolic resin), styrene resins, acrylic resins, petroleum resins (e.g., a C5 petroleum resin such as a dicyclopentadiene resin, a C9 petroleum resin, an alicyclic petroleum resin, and a C5/C9 copolymer-based petroleum resin), xylene resins (e.g., a xylene resin, a xylene-acetylene resin, and a xylene-formaldehyde resin), α-pinene resins, and aliphatic saturated hydrocarbon resins. The blended amount of such an additional resin is, for example, from 10 to 150 parts by mass with respect to 100 parts by mass of the diene rubber.

Because the rubber composition of an embodiment of the present invention enhances dry grip performance and exhibits excellent steering stability and wear resistance, the rubber composition can be suitably used for a tread, especially a cap tread, of a tire, and preferably used for a tread, especially a cap tread, of a racing tire. The tire of an embodiment of the present invention is preferably a pneumatic tire, and can be inflated with air, an inert gas such as nitrogen, or another gas.

### Example

The present invention will be described below in further detail by way of Examples and Comparative Examples, but the present invention is not limited to these examples.

### Standard Examples 1 and 2, Examples 1 to 10, and Comparative Examples 1 to 7 Preparation of Sample

For the composition (part by mass) listed in Table 1 or 2, the components other than the vulcanization accelerators and sulfur were kneaded for 5 minutes in a 1.7-L sealed Banbury mixer. The rubber was then discharged outside of the mixer and cooled at room temperature. Thereafter, the rubber was placed in the mixer again, and the vulcanization accelerators and sulfur were then added to the mixture and further kneaded to obtain a rubber composition. Next, the resulting rubber composition was pressure-vulcanized in a predetermined mold at 160°C for 20 minutes to produce a vulcanized rubber test piece, and then the test methods shown below were used to measure the physical properties of the vulcanized rubber test piece.

Dry grip performance: tan δ (100°C) was measured under conditions of an initial strain of 10%, an amplitude of ±2%, and a frequency of 20 Hz by using a viscoelasticity spectrometer, available from Toyo Seiki Seisaku-sho, Ltd., in accordance with JIS K 6394, and this value was used for evaluation of the dry grip performance. The results are expressed as index values with Standard Example 1 or 2 being assigned the value of 100. A larger index value indicates better dry grip performance.

Hardness (100°C): measured at 100°C in accordance with JIS K 6253. The results are expressed as index values with Standard Example 1 or 2 being assigned the value of 100. A larger index value indicates higher hardness and superior steering stability.

Strength at break: In accordance with JIS K 6251, a dumbbell-shaped No. 3 sample piece was punched out from the above-mentioned vulcanized rubber test piece and subjected to a tensile test at a tensile speed of 500 mm/min, and the elongation at break (%) was measured. The results are expressed as index values with Standard Example 1 or 2 being assigned the value of 100. A larger index value indicates superior strength at break and better wear resistance.

The results are shown in Tables 1 and 2. Note that Standard Example 1 is compared with Examples 1 to 6 and Comparative Examples 1 to 3, and Standard Example 2 is compared with Examples 7 to 10 and Comparative Examples 4 to 7.

### Table 1

**Table 1**

| | Standard Example 1 | Compa-r ative Example 1 | Compa-r ative Example 2 | Compa-r ative Example 3 | Example 1 | Example 2 | Example 3 | Example 4 | Example 5 | Example 6 | Example 7 |
|---|---|---|---|---|---|---|---|---|---|---|---|
| SBR 1 *1 | 137.5 | 137.5 | 137.5 | 137.5 | 137.5 | 137.5 | 137.5 | - | 137.5 | 137.5 | 137.5 |
| SBR 2 *2 | - | - | - | - | - | - | - | 137.5 | - | - | - |
| Carbon black 1 *3 | 100.0 | 100.0 | 100.0 | 100.0 | 100.0 | 100.0 | - | 100.0 | 100.0 | 100.0 | 100.0 |
| Carbon black 2 *4 | - | - | - | - | - | - | 100.0 | - | - | - | - |
| Resin 1 *5 | 30.0 | - | - | - | - | - | - | - | - | - | - |
| Resin 2 *6 | - | 30.0 | - | - | - | - | - | - | - | - | - |
| Resin 3 *7 | - | - | 30.0 | - | - | - | - | - | - | - | - |
| Resin 4 *8 | - | - | - | 30.0 | - | - | - | - | - | - | - |
| Resin 5 *9 | - | - | - | - | 30.0 | 60.0 | 30.0 | 30.0 | 30.0 | 90.0 | - |
| Resin 6 *10 | - | - | - | - | - | - | - | - | - | - | 30.0 |
| Liquid SBR *12 | - | - | - | - | - | - | - | - | 30.0 | - | - |
| Oil *13 | 30.0 | 30.0 | 30.0 | 30.0 | 30.0 | 30.0 | 30.0 | 30.0 | - | 30.0 | 30.0 |
| Stearic acid *14 | 2.0 | 2.0 | 2.0 | 2.0 | 2.0 | 2.0 | 2.0 | 2.0 | 2.0 | 2.0 | 2.0 |
| Zinc oxide *15 | 2.0 | 2.0 | 2.0 | 2.0 | 2.0 | 2.0 | 2.0 | 2.0 | 2.0 | 2.0 | 2.0 |
| Anti-aging agent *16 | 2.0 | 2.0 | 2.0 | 2.0 | 2.0 | 2.0 | 2.0 | 2.0 | 2.0 | 2.0 | 2.0 |
| Vulcanization accelerator *17 | 2.0 | 2.0 | 2.0 | 2.0 | 2.0 | 2.0 | 2.0 | 2.0 | 2.0 | 2.0 | 2.0 |
| Sulfur *18 | 1.5 | 1.5 | 1.5 | 1.5 | 1.5 | 1.5 | 1.5 | 1.5 | 1.5 | 1.5 | 1.5 |
| Measurement result | | | | | | | | | | | |
| Dry grip performance (tan δ (100°C)) | 100 | 98 | 90 | 93 | 105 | 117 | 114 | 113 | 110 | 130 | 106 |
| Hardness (100°C) | 100 | 98 | 102 | 103 | 105 | 102 | 111 | 109 | 106 | 100 | 103 |
| Strength at break | 100 | 109 | 113 | 115 | 114 | 109 | 121 | 111 | 118 | 105 | 113 |

### Table 2

**Table 2**

| | Standard Example 2 | Comparative Example 4 | Comparative Example 5 | Comparative Example 6 | Example 7 | Example 8 | Example 9 | Example 10 | Comparative Example 7 |
|---|---|---|---|---|---|---|---|---|---|
| SBR 1 *1 | 137.5 | 137.5 | 137.5 | 137.5 | 137.5 | 137.5 | - | 137.5 | 137.5 |
| SBR 2 *2 | - | - | - | - | - | - | 137.5 | - | - |
| Carbon black 1 *3 | 100.0 | 100.0 | 100.0 | 100.0 | 100.0 | - | 100.0 | 100.0 | 100.0 |
| Carbon black 2 *4 | - | - | - | - | - | 100.0 | - | - | - |
| Resin 1 *5 | 60.0 | - | - | - | - | - | - | - | - |
| Resin 2 *6 | - | 60.0 | - | - | - | - | - | - | - |
| Resin 3 *7 | - | - | 60.0 | - | - | - | - | - | - |
| Resin 4 *8 | - | - | - | 60.0 | - | - | - | - | - |
| Resin 5 *9 | - | - | - | - | 60.0 | 60.0 | 60.0 | 60.0 | 120.0 |
| Resin 6 *10 | - | - | - | - | - | - | - | - | - |
| Resin 7 *11 | 60.0 | 60.0 | 60.0 | 60.0 | 60.0 | 60.0 | 60.0 | 60.0 | 60.0 |
| Liquid SBR *12 | - | - | - | - | - | - | - | 30.0 | - |
| Oil *13 | 30.0 | 30.0 | 30.0 | 30.0 | 30.0 | 30.0 | 30.0 | - | 30.0 |
| Stearic acid *14 | 2.0 | 2.0 | 2.0 | 2.0 | 2.0 | 2.0 | 2.0 | 2.0 | 2.0 |
| Zinc oxide *15 | 2.0 | 2.0 | 2.0 | 2.0 | 2.0 | 2.0 | 2.0 | 2.0 | 2.0 |
| Anti-aging agent *16 | 2.0 | 2.0 | 2.0 | 2.0 | 2.0 | 2.0 | 2.0 | 2.0 | 2.0 |
| Vulcanization accelerator *17 | 2.0 | 2.0 | 2.0 | 2.0 | 2.0 | 2.0 | 2.0 | 2.0 | 2.0 |
| Sulfur *18 | 1.5 | 1.5 | 1.5 | 1.5 | 1.5 | 1.5 | 1.5 | 1.5 | 1.5 |
| Measurement result | | | | | | | | | |
| Dry grip performance (tan δ (100°C)) | 100 | 97 | 86 | 89 | 109 | 122 | 120 | 119 | 150 |
| Hardness (100°C) | 100 | 96 | 105 | 108 | 113 | 120 | 115 | 114 | 87 |
| Strength at break | 100 | 115 | 125 | 128 | 123 | 131 | 115 | 127 | 98 |

| | | | | | | | | | |
|---|---|---|---|---|---|---|---|---|---|
| *1: SBR 1 (Nipol 1739, available from Zeon Corporation (styrene amount = 40 mass%)) *2: SBR 2 (Nipol 1723, available from Zeon Corporation (styrene amount = 23.5 mass%)) *3: Carbon black 1 (Show Black N339, available from Cabot Japan; N₂SA = 94 m²/g) *4: Carbon black 2 (SEAST 9, available from Tokai Carbon Co., Ltd.; N₂SA= 142 m²/g) *5: Resin 1 (YS POLYSTER S145, available from Yasuhara Chemical Co., Ltd.; phenol-modified terpene resin; acid value = 0 mg KOH/g) *6: Resin 2 (Tamanol 803L, available from Arakawa Chemical Industries, Ltd.; rosin phenolic resin; acid value = 52 mg KOH/g) *7: Resin 3 (MALKYD No. 5, available from Arakawa Chemical Industries, Ltd.; maleic acid-modified rosin resin; acid value = 19 mg KOH/g) *8: Resin 4 (PENSEL KK, available from Arakawa Chemical Industries, Ltd.; rosin ester resin; acid value = 19 mg KOH/g) *9: Resin 5 (rosin-modified phenolic resin; reaction product of rosin, phenols, formaldehyde, and a polyol; acid value = 15 mg KOH/g) *10: Resin 6 (rosin-modified phenolic resin; reaction product of rosin, phenols, formaldehyde, and a polyol; acid value = 17 mg KOH/g) *11: Resin 7 (Neopolymer 140, available from ENEOS Corporation) *12: Liquid SBR (RICON 100, available from Cray Valley; weight average molecular weight = 6400; Tg = -15°C) *13: Oil (Extract No. 4S, available from Showa Shell Sekiyu K.K.) *14: Stearic acid (Beads Stearic Acid YR, available from NOF Corporation) *15: Zinc oxide (Zinc Oxide III, available from Seido Chemical Industry Co., Ltd.) *16: Anti-aging agent (6PPD, available from Flexsys) *17: Vulcanization accelerator (NOCCELER CZ-G, available from Ouchi Shinko Chemical Industrial Co., Ltd.) *18: Sulfur (Golden Flower oil treated sulfur powder, available from Tsurumi Chemical Industry Co., Ltd.) | | | | | | | | | |

The results of Tables 1 and 2 shows that, in each of the rubber compositions of Examples, from 1 to 100 parts by mass of the rosin-modified phenolic resin having an acid value of less than 30 mg KOH/g is blended with 100 parts by mass of the diene rubber, and thus, dry grip performance, steering stability, and wear resistance were simultaneously enhanced, compared to those of Standard Example 1 or 2.

On the other hand, in Comparative Example 1, which had the acid value of the rosin-modified phenolic resin exceeding the upper limit stipulated in the present invention, dry grip performance and hardness deteriorated.

In Comparative Example 2, which was an example using the maleic acid-modified rosin resin, dry grip performance deteriorated.

In Comparative Example 3, which was an example using the rosin ester resin, dry grip performance deteriorated.

In Comparative Example 4, which had the acid value of the rosin-modified phenolic resin exceeding the upper limit stipulated in the present invention, dry grip performance and hardness deteriorated.

In Comparative Example 5, which was an example using the maleic acid-modified rosin resin, dry grip performance deteriorated.

In Comparative Example 6, which was an example using the rosin ester resin, dry grip performance deteriorated.

In Comparative Example 7, which had the blended amount of the rosin-modified phenolic resin exceeding the upper limit stipulated in the present invention, hardness and strength at break deteriorated.

The present disclosure includes the following inventions.

Invention [1]: A tire rubber composition containing:
a diene rubber; and
from 1 to 100 parts by mass of a rosin-modified phenolic resin having an acid value of less than 30 mg KOH/g with respect to 100 parts by mass of the diene rubber.

Invention [2]: The tire rubber composition according to Invention [1], further containing from 50 to 200 parts by mass of carbon black having a nitrogen adsorption specific surface area (N₂SA) of 100 to 500 m²/g, with respect to 100 parts by mass of the diene rubber.

Invention [3]: The tire rubber composition according to Invention [1] or [2], where the diene rubber contains a styrene-butadiene copolymer rubber having a styrene amount of less than 35 mass%.

Invention [4]: The tire rubber composition according to any one of Inventions [1] to [3], further containing a liquid aromatic vinyl-conjugated diene rubber having a glass transition temperature (Tg) of -40°C or higher, with respect to 100 parts by mass of the diene rubber.

Invention [5]: The tire rubber composition according to any one of Inventions [1] to [4], wherein the diene rubber consists of a styrene-butadiene copolymer rubber.

Invention [6]: The tire rubber composition according to any one of Inventions [1] to [5], wherein the acid value of the rosin-modified phenolic resin is from 5 to 25 mg KOH/g.

Invention [7]: The tire rubber composition according to Invention [4], where the liquid aromatic vinyl-conjugated diene rubber is a liquid styrene-butadiene copolymer having a weight average molecular weight of 2000 to 40000.

Invention [8]: The tire rubber composition according to Invention [4], where the glass transition temperature (Tg) of the liquid aromatic vinyl-conjugated diene rubber is from -20°C to -5°C.

Invention [9]: A tire containing the tire rubber composition according to any one of Inventions [1] to [8] in a cap tread.

## Claims

1. A tire rubber composition comprising:
a diene rubber; and
from 1 to 100 parts by mass of a rosin-modified phenolic resin having an acid value of less than 30 mg KOH/g with respect to 100 parts by mass of the diene rubber.

2. The tire rubber composition according to claim 1, further comprising from 50 to 200 parts by mass of carbon black having a nitrogen adsorption specific surface area (N₂SA) of 100 to 500 m²/g, with respect to 100 parts by mass of the diene rubber.

3. The tire rubber composition according to claim 1, wherein the diene rubber contains a styrene-butadiene copolymer rubber having a styrene amount of less than 35 mass%.

4. The tire rubber composition according to claim 1, further comprising a liquid aromatic vinyl-conjugated diene rubber having a glass transition temperature (Tg) of -40°C or higher, with respect to 100 parts by mass of the diene rubber.

5. The tire rubber composition according to claim 1, wherein the diene rubber consists of a styrene-butadiene copolymer rubber.

6. The tire rubber composition according to claim 1, wherein the acid value of the rosin-modified phenolic resin is from 5 to 25 mg KOH/g.

7. The tire rubber composition according to claim 4, wherein the liquid aromatic vinyl-conjugated diene rubber is a liquid styrene-butadiene copolymer having a weight average molecular weight of 2000 to 40000.

8. The tire rubber composition according to claim 4, wherein the glass transition temperature (Tg) of the liquid aromatic vinyl-conjugated diene rubber is from -20°C to -5°C.

9. A tire comprising the tire rubber composition according to claim 1 in a cap tread.
